# EUROPEAN PATENT SPECIFICATION

(11) **EP 4 059 792 B1**
(45) Date of publication and mention of the grant of the patent: **27.03.2024**
(21) Application number: 21162513.2
(22) Date of filing: 15.03.2021
(51) Int. Cl.: B60T 17/08

(54) **SPRING BRAKE ACTUATOR FOR USE IN A VEHICLE, AND USE OF A DISC SPRING THEREIN**
FEDERBREMSAKTUATOR ZUR VERWENDUNG IN EINEM FAHRZEUG UND VERWENDUNG EINER TELLERFEDER DARIN
ACTIONNEUR DE FREIN À RESSORT DESTINÉ À ÊTRE UTILISÉ DANS UN VÉHICULE ET UTILISATION D'UN RESSORT À DISQUE DANS CELUI-CI

(43) Date of publication of application: 21.09.2022
(73) Proprietor: ZF CV Systems Europe BV, 1170 Brussels (BE)
(72) Inventor: TRELA, Marcin, 57-100 Wroclaw (PL)
(74) Representative: Ohlendorf, Henrike

(56) References cited:
- EP-A2- 0 074 734
- GB-A- 1 328 089
- US-A- 4 552 056

## Description

The invention relates to a spring brake actuator for use in a vehicle, in particular in a commercial vehicle, the spring brake actuator comprising a housing part having a housing part having a housing base, a piston that is located inside the housing and configured to move along a stroke axis from a retracted position towards an extended position such as to transmit a brake force, and a spring assembly mounted between the housing base and the piston, wherein in the spring assembly comprises an axis of action, preferably aligned in parallel to the stroke axis and is operatively coupled to the piston such as to store potential energy and the piston is in the retracted position and to move the piston towards the extended position by transforming potential energy into kinetic energy.

Spring brake actuators of the aforementioned type are widely known in the industry. Typically, the aforementioned housing part is also referred to as a spring brake portion, and the core functionality of the spring assembly is to generate a parking or emergency brake function which is transmitted by the piston onwards to a brake mechanism. Typically, these spring brake actuators additionally comprise a service brake portion which interacts with the spring brake piston of the spring brake portion and comprises a push rod which is operatively coupled to the brake mechanism.

Typically, the spring assembly in the spring brake portion of a spring brake actuator is held in a loaded state by pressurizing a spring brake chamber which is delimited in part by either the spring piston itself or a diaphragm which abuts against the piston. If pressure is released from the spring brake chamber, the spring assembly is allowed to release from its loaded state and move the piston from the retracted position towards its extended position. Depending on the suddenness of the pressure release, the expansion movement of the spring and thus the movement of the piston can be very rapid. Rapid movement is essential in order to provide the required suddenness of reaction for emergency functions. At the same time, considerable amounts of potential energy need to be stored by the spring assembly in order to provide sufficient suddenness of movement over the required stroke length. One exemplary commercial example for the aforementioned spring brake actuator would be the so-called Tri-Stop brake actuators of the applicant.

While the working principle of the aforementioned spring brake actuators is very reliable and satisfies safety needs, the ever-increasing complexity of vehicle systems creates a demand for optimizing build size of vehicle components in general, and braking components in particular. A crucial factor for vehicle brake systems is the build side of a brake actuator in the direction of the stroke axis, i.e. the axis of action of the spring assembly.

EP 0 074 734 A2 discloses a spring brake actuator with a spring assembly inside the spring brake actuator, wherein the spring assembly comprises one disc spring. In view thereof, it was an object of the invention to provide a spring brake actuator which can provide the required braking functionality at improved i.e. reduced, space requirements.

The invention attains the aforementioned object by suggesting a spring brake actuator having the features of claim 1. In particular, the invention suggests a spring brake actuator of the initially mentioned type, wherein the spring assembly comprises at least one disc spring.

The invention is based upon the realization that instead of conventional compression springs which have been used in spring assemblies before, either as conically, cylindrically or (bi-)convexly wound coil springs, a spring assembly having at least one disc spring would be suited to satisfy the need of generating considerable brake force. It has been found that the design needs of disc springs allow for space-saving installation inside the spring brake actuator and help to significantly reduce the overall size of the spring brake actuator in the direction of the axis of action. The deformation rate of a disc spring is not as linear as the deformation rate of a coil spring in general, but the inventors found out that linearity is not of utmost importance for providing the required braking functionality, such that a disc spring, or rather any given number of disc springs, may be employed in a spring actuator according to the invention without adverse effect.

The functioning principle of the known spring brake actuators can be maintained: The spring brake piston is moved into the retracted position by applying pressure inside the housing part, thereby deforming the spring assembly with the at least one disc spring into a loaded position in which the energy use to deform the spring as stall as potential energy. Upon release of pressure inside the housing part, the potential energy stored in the spring assembly is released and transformed into kinetic energy by moving the spring brake piston towards the extended position.

According to the invention, the disc spring comprises a base body having a shell. Wherein in the released state of the disc spring, the shell preferably comprises a frusto-conically shaped portion, said portion preferably defining an opening angle in a cross-sectional plane along the axis of action, wherein in the extended position of the piston, the opening angle is smaller than in the retracted position. The smaller the angle in the extended position of the piston, the stiffer the deformation behaviour of the disc spring will be. Additionally or alternatively, the shell preferably comprises a planar portion extending in a plane perpendicular to the axis of action, when in the released state of the disc spring. The planar portion of the disc spring helps to smooth out the overall stiffness of the disc spring and contributes to a softer initial deformation.

Generally, the disc spring according to the invention may also be formed as a planar washer spring, or a frusto-conically shaped washer spring, also referred to as Belleville spring. However, the disc spring according to the invention may also be formed as a diaphragm spring. As such, the shell preferably comprises a plurality of serrations extending from one radial periphery of the shell partially towards the opposing radial periphery such as to define a plurality of spring tongues. The spring tongues may for example extend inwardly from an outer periphery of the shell, or may extend outwardly from an inner periphery of the shell. Preferentially, each spring tongue is elastically deformable individually such that a disc spring having a plurality of serrations maybe beneficial when actuating a piston which is allowed to tilt into the housing part to some degree.

In a further preferred embodiment, the spring tongues are integrally formed on a peripheral ring section of the disc spring. As mentioned before, this might be either an inner or outer ring section of the disc spring of the shell. It would, however, be possible to form the disc spring of multiple parts, which are then assembled together. Forming the spring tongues integrally on a peripheral spring section allows for producing the disc spring from a singular piece of material.

The invention has hereinabove been described with the spring assembly having "at least one" disc spring. In a preferred embodiment, in case larger spring forces are required, or if a larger stroke length needs to be bridged by the spring assembly, the spring assembly comprises a plurality of disc springs arranged adjacent to one another along the axis of action. Preferably, the plurality of disc spring comprises at least one group of springs arranged in a stack. A stack is herein understood to mean a set of springs that are arranged in parallel to one another. When a disc spring having a frusto-conically shape portion is used, this means that the frusto-conical portions within the stack are oriented in the same manner. This has the effect of increasing the stiffness of the spring assembly considerably, since the stacked springs act like coil springs arranged parallel to one another.

Additionally or alternatively, the plurality of disc springs comprises a plurality of disc springs or stacks arranged to one another in X- or O-configuration. By orienting one disc spring (or stack) not parallel but oppositely to the adjacent spring (or stack), they either form an X with one another or an O. Doing so has the same effect as if a plurality of coil springs were arranged in series to one another and provides for a comparatively soft deformation behavior while achieving longer spring travel.

In a preferred embodiment, the housing part of the spring brake actuator comprises a housing base and a spring seed provided at the housing base, wherein the spring seed is operatively coupled to the spring assembly, in particular to a disc spring of the spring assembly and effective to hold the spring assembly reliably in place in the loaded position.

The invention has hereinabove been described with respect to the spring brake actuator itself. In a further aspect, the invention also relates to a use of a specific type of spring in a spring assembly of a brake actuator of a vehicle, in particular a commercial vehicle.

The inventions achieves the same object in this aspect as the spring actuator of the first aspect by suggesting that a disc spring be used, such that a spring brake actuator in accordance of any one of the preferred embodiments described hereinabove is obtained.

The benefits and preferred embodiments of the spring brake actuator of the first aspect are also benefits and preferred embodiments of the use of the second aspect and vice versa, so that reference is made to the description thereof hereinabove and hereinafter, in order to avoid unnecessary repetition.

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and disclaimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

In brief, the figures to which reference will be made show:

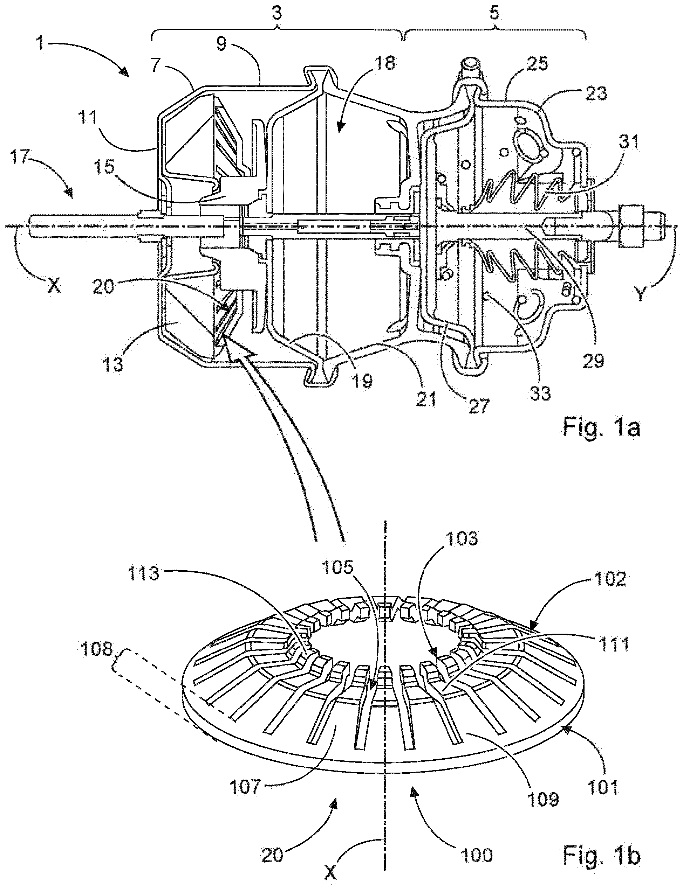

- Fig. 1a: shows a schematic cross-sectional side view of a spring brake actuator according to the invention and
- Fig. 1b: shows a schematic 3D-dimensional view of a spring assembly for the actuator of Fig. 1a.

In exemplary Fig. 1a, a spring brake actuator 1 is shown. The spring brake actuator 1 comprises a spring brake portion 3 and a service brake portion 5.

In the spring brake portion 3, a housing part 7 is provided which comprises a side wall 9 and a housing base 11. On the housing base 11, a spring seat 13 is provided. The spring brake portion 3 comprises inside the housing part 7 a spring brake piston 15 which is shown in a retracted position and which is configured to reciprocating move between the shown retracted position and an extended position in the direction of a stroke axis Y, which is towards the right in Fig. 1a.

The spring brake piston 15 is operatively coupled to a release mechanism 17. A spring assembly 20 is mounted inside the housing part 7 and is operatively coupled in between the spring seat 13 and the spring brake piston 15. The spring assembly 20 is configured to store potential energy in a loaded state, which is presently shown Fig. 1a, and to release and transform the potential energy stored in the spring when moving the spring brake piston 15 towards its extended position. This may be for example accomplished by releasing pressure from a pressure chamber 18. The necessary pressure lines and conduits are generally known and omitted from the figures to increase clarity with respect to the invention at hand.

Upon release of pressure in the pressure chamber 18, the spring brake piston 15 acts against a diaphragm 19 and moves a piston extension against a push rod 29, which is located in the service brake portion 5. The push rod 29 of the service brake portion 5 is housed in a service housing part 23. A side wall 25 of the service brake portion 5 is mounted together with a second diaphragm 27 to a central flange portion 21. On the other side of that flange portion 21, the first diaphragm 19 and the spring brake housing part 7 are mounted.

In the service brake portion 5, a return spring 33 is configured to restore the push rod 29 towards its retracted position (shown in Fig. 1a), and a bellows 31 protects the push rod 29 from ingress of dirt etc.

The spring assembly 21 has an axis of action X which is allied in parallel, preferably coaxially, to the stroke direction Y of the spring brake actuator 1.

As can best be seen in Fig. 1b, the spring assembly 20 comprises at least one disc spring 100. In the shown embodiment, the disc spring 100 comprises a shell 101 which extends from a radial outer periphery 102 towards a radial inner periphery 103. The shell 101 comprises a frusto-conically portion 109 and, adjacent thereto, a substantially planar portion 111 which extends in a plane perpendicular to the axis of action X. The radial inner periphery 103 comprises a protrusion 113 which acts as a mounting a positioning interface against the spring brake piston 15, cf. Fig. 1a.

While the disc spring 100 might in principle also be shaped as a Belleville spring, it may be beneficial for easier deformation to provide a plurality of serrations 105, which extend from one periphery, in the given example from the inner periphery 103, partially towards the opposite periphery, in this case the outer periphery 101. Thus, the serrations 105 form a plurality of spring tongues 107 each of which preferably is individually deformable to allow for better contact and action against the spring brake piston 15.

The spring tongues 107 are integrally formed on or joined to a ring section 108 at the outer peripheral section 101 of the disc spring 100.

In an alternative embodiment which is not shown, it might be just the other way around: The spring tongues 107 might be formed integrally to in inner ring section at the inner periphery 103 and extend outwardly toward the outer periphery 101.

In the embodiments shown, the spring assembly 20 comprises exactly one disc spring 100. It is however easily understood that the number of disc springs 100 may be increased as is required in view of spring travel and spring force. A plurality of spring discs might for example be stacked, or several stacks might be grouped together in X- or O-configuration.

At any rate, it is clear from the embodiments that the spring assembly 20 having one or more disc springs 100 achieves a significant reduction in build size in the direction of the stroke axis Y as compared to conventional compression springs. At the same time, spring assemblies comprising or consisting of disc springs can store efficient spring loads as potential energy without adverse effect on the function principal of the spring brake actuator 1 as a whole.

### List of reference signs

- 1: spring brake actuator
- 3: spring brake portion
- 5: service brake portion
- 7: housing part
- 9: side wall
- 11: housing base
- 13: spring seat
- 15: spring brake piston
- 17: release mechanism
- 18: pressure chamber
- 19: diaphragm
- 20: spring assembly
- 21: central flange portion
- 23: service housing part
- 25: side wall
- 27: diaphragm
- 29: push rod
- 31: bellows
- 33: return spring

- 100: disc spring
- 101: shell
- 102: outer periphery
- 103: inner periphery
- 105: serration
- 107: spring tongues
- 108: ring section
- 109: frusto-conical portion
- 111: planar portion
- 113: protrusion
- X: axis of action
- Y: stroke axis

## Claims

1. Spring brake actuator (1) for use in a vehicle, in particular in a commercial vehicle, the spring brake actuator comprising:
- a housing part defined as service brake portion (3) having a housing base (11),
- a spring brake piston (15) that is located inside the housing and configured to move along a stroke axis (y) from a retracted position towards an extended position such as to transmit a brake force, and
- a spring assembly (20) mounted between the housing base (11) and the spring brake piston (15), wherein the spring assembly (20) comprises an axis of action (x), preferably aligned in parallel to the stroke axis (y), and is operatively coupled to the spring brake piston (15) such as to store potential energy when the spring brake piston (15) is in the retracted position, and to move the piston towards the extended position by transforming potential energy into kinetic energy,
wherein the spring assembly (20) comprises at least one disc spring (100), **characterized in that** the disc spring (100) comprises a base body having a shell (101), when in the released state of the disc spring (100), comprises a frusto-conically shaped portion (109) defining an opening angle in a cross-sectional plane along the axis of action (x), wherein in the extended position of the piston, the opening angle is smaller than in the retracted position.

2. The spring brake actuator (1) of claim 1, wherein the shell (101), when in the released state of the disc spring (100), comprises a planar portion (111) extending in a plane perpendicular to the axis of action (X).

3. The spring brake actuator (1) of any one of claims 1 to 2, wherein the shell (101) comprises a plurality of serrations (105) extending from one radial periphery (102) of the shell (101) partially towards the opposing radial periphery (103) such as to define a plurality of spring tongues (107).

4. The spring brake actuator (1) of claim 3, wherein the spring tongues (107) are integrally formed on a peripheral ring section (108) of the disc spring (100).

5. The spring brake actuator (1) of any one of the preceding claims, wherein the spring assembly (20) comprises a plurality of disc springs (100) arranged adjacent to one another along the axis of action (X).

6. The spring brake actuator (1) of claim 5, wherein the plurality of disc springs (100) comprises at least one group of springs arranged in a stack.

7. The spring brake actuator (1) of claim 7, wherein the plurality of disc springs (100) comprises plurality of stacks arranged to one another in X- or O-configuration.

8. The spring brake actuator (1) of any one of the preceding claims, Wherein the housing part (5) comprises a housing base (11) and a spring seat (13) provided at the housing base (11), wherein the spring seat (13) is operatively coupled to the spring assembly (20).

9. The spring brake actuator (1) of any one of the preceding claims, Wherein the disc spring (100) is partially or completely made of sheet metal, in particular spring steel.

10. A use of a disc spring (100) in a spring assembly of a brake actuator (1) of a vehicle, in particular a commercial vehicle, wherein the spring brake actuator (1) is a spring brake actuator according to any one of the preceding claims.

## Patentansprüche

1. Federspeicherbremszylinder (1) zur Verwendung in einem Fahrzeug, insbesondere in einem Nutzfahrzeug, der Federspeicherbremszylinder umfassend:
- ein Gehäuseteil, das als Betriebsbremsstück (3) definiert ist, das eine Gehäusebasis (11) aufweist,
- einen Federspeicherbremskolben (15), der sich innerhalb des Gehäuses befindet und konfiguriert ist, um sich entlang einer Hubachse (y) von einer eingefahrenen Position zu einer ausgefahrenen Position hin derart zu bewegen, um eine Bremskraft zu übertragen, und
- eine Federspeicheranordnung (20), die zwischen der Gehäusebasis (11) und dem Federspeicherbremskolben (15) montiert ist, wobei die Federspeicheranordnung (20) eine Wirkungsachse (x), die vorzugsweise parallel zu der Hubachse (y) ausgerichtet ist, umfasst und mit dem Federspeicherbremskolben (15) derart betriebsfähig gekoppelt ist, um potenzielle Energie zu speichern, wenn sich der Federspeicherbremskolben (15) in der eingefahrenen Position befindet, und um den Kolben zu der ausgefahrenen Position hin durch Umwandeln potenzieller Energie in kinetische Energie zu bewegen,
wobei die Federspeicheranordnung (20) mindestens eine Tellerfeder (100) umfasst, **dadurch gekennzeichnet, dass** die Tellerfeder (100) einen Basiskörper umfasst, der eine Schale (101) aufweist, die, wenn sie in dem gelösten Zustand der Tellerfeder (100) ist, ein kegelstumpfförmiges Stück (109) umfasst, das einen Öffnungswinkel in einer Querschnittsebene entlang der Wirkungsachse (x) definiert, wobei der Öffnungswinkel in der ausgefahrenen Position des Kolbens kleiner als in der eingefahrenen Position ist.

2. Federspeicherbremszylinder (1) nach Anspruch 1,
wobei die Schale (101), wenn sie in dem gelösten Zustand der Tellerfeder (100) ist, ein ebenes Stück (111), das sich in einer Ebene senkrecht zu der Wirkungsachse (X) erstreckt, umfasst.

3. Federspeicherbremszylinder (1) nach einem der Ansprüche 1 bis 2,
wobei die Schale (101) eine Vielzahl von Kerbverzahnungen (105) umfasst, die sich von einem radialen Umfang (102) der Schale (101) teilweise zu dem gegenüberliegenden radialen Umfang (103) hin derart erstrecken, um eine Vielzahl von Federzungen (107) zu definieren.

4. Federspeicherbremszylinder (1) nach Anspruch 3,
wobei die Federzungen (107) an einem Umfangsringabschnitt (108) der Tellerfeder (100) einstückig ausgebildet sind.

5. Federspeicherbremszylinder (1) nach einem der vorstehenden Ansprüche,
wobei die Federspeicheranordnung (20) eine Vielzahl von Tellerfedern (100), die entlang der Wirkungsachse (X) angrenzend aneinander eingerichtet sind, umfasst.

6. Federspeicherbremszylinder (1) nach Anspruch 5,
wobei die Vielzahl von Tellerfedern (100) mindestens eine Gruppe von Federn, die in einem Stapel eingerichtet sind, umfasst.

7. Federspeicherbremszylinder (1) nach Anspruch 7,
wobei die Vielzahl von Tellerfedern (100) eine Vielzahl von Stapeln, die in X- oder O-Konfiguration zueinander eingerichtet sind, umfasst.

8. Federspeicherbremszylinder (1) nach einem der vorstehenden Ansprüche,
wobei das Gehäuseteil (5) eine Gehäusebasis (11) und einen Federsitz (13), der an der Gehäusebasis (11) bereitgestellt ist, umfasst, wobei der Federsitz (13) mit der Federspeicheranordnung (20) betriebsfähig gekoppelt ist.

9. Federspeicherbremszylinder (1) nach einem der vorstehenden Ansprüche,
wobei die Tellerfeder (100) teilweise oder vollständig aus Blech, insbesondere Federstahl, hergestellt ist.

10. Verwendung einer Tellerfeder (100) in einer Federspeicheranordnung eines Bremszylinders (1) eines Fahrzeugs, insbesondere eines Nutzfahrzeugs, wobei der Federspeicherbremszylinder (1) ein Federspeicherbremszylinder nach einem der vorstehenden Ansprüche ist.

## Revendications

1. Actionneur de frein à ressort (1) destiné à être utilisé dans un véhicule, en particulier dans un véhicule utilitaire, l'actionneur de frein à ressort comprenant :
- une partie de logement définie comme une partie de frein de service (3) ayant une base de logement (11),
- un piston de frein à ressort (15) qui est situé à l'intérieur du logement et conçu pour se déplacer le long d'un axe de course (y) depuis une position rétractée vers une position étendue de manière à transmettre une force de frein, et
- un ensemble ressort (20) monté entre la base de logement (11) et le piston de frein à ressort (15), dans lequel l'ensemble ressort (20) comprend un axe d'action (x), de préférence aligné en parallèle à l'axe de course (y), et est couplé de manière fonctionnelle au piston de frein à ressort (15) de façon à stocker une énergie potentielle lorsque le piston de frein à ressort (15) est dans la position rétractée, et à déplacer le piston vers la position étendue en transformant l'énergie potentielle en énergie cinétique,
dans lequel l'ensemble ressort (20) comprend au moins un ressort à disque (100), **caractérisé en ce que** le ressort à disque (100) comprend un corps de base ayant une coque (101), lorsqu'elle est dans l'état libéré du ressort à disque (100), comprend une partie de forme tronconique (109) définissant un angle d'ouverture dans un plan en section transversale le long de l'axe d'action (x), dans lequel dans la position étendue du piston, l'angle d'ouverture est plus petit que dans la position rétractée.

2. Actionneur de frein à ressort (1) selon la revendication 1,
dans lequel la coque (101), lorsqu'elle est dans l'état libéré du ressort à disque (100), comprend une partie plane (111) s'étendant dans un plan perpendiculaire à l'axe d'action (X).

3. Actionneur de frein à ressort (1) selon l'une quelconque des revendications 1 à 2,
dans lequel la coque (101) comprend une pluralité de dentelures (105) s'étendant à partir d'une périphérie radiale (102) de la coque (101) partiellement vers la périphérie radiale opposée (103) de manière à définir une pluralité de languettes de ressort (107).

4. Actionneur de frein à ressort (1) selon la revendication 3,
dans lequel les languettes de ressort (107) sont formées d'un seul tenant sur une section d'anneau périphérique (108) du ressort à disque (100).

5. Actionneur de frein à ressort (1) selon l'une quelconque des revendications précédentes,
dans lequel l'ensemble ressort (20) comprend une pluralité de ressorts à disque (100) agencés adjacents l'un à l'autre le long de l'axe d'action (X).

6. Actionneur de frein à ressort (1) selon la revendication 5,
dans lequel la pluralité de ressorts à disque (100) comprend au moins un groupe de ressorts agencés dans une pile.

7. Actionneur de frein à ressort (1) selon la revendication 7,
dans lequel la pluralité de ressorts à disque (100) comprend une pluralité de piles agencées les unes par rapport aux autres en configuration X ou O.

8. Actionneur de frein à ressort (1) selon l'une quelconque des revendications précédentes,
dans lequel la partie de logement (5) comprend une base de logement (11) et un siège de ressort (13) prévu au niveau de la base de logement (11), dans lequel le siège de ressort (13) est accouplé de manière fonctionnelle à l'ensemble ressort (20).

9. Actionneur de frein à ressort (1) selon l'une quelconque des revendications précédentes,
dans lequel le ressort à disque (100) est partiellement ou totalement en tôle, en particulier en acier à ressort.

10. Utilisation d'un ressort à disque (100) dans un ensemble ressort d'un actionneur de frein (1) d'un véhicule, en particulier d'un véhicule utilitaire, dans lequel l'actionneur de frein à ressort (1) est un actionneur de frein à ressort selon l'une quelconque des revendications précédentes.
